# EUROPEAN PATENT APPLICATION

(11) **EP 2 357 411 A2**
(43) Date of publication of application: **17.08.2011**
(21) Application number: 11152832.9
(22) Date of filing: 01.02.2011
(51) Int. Cl.: F23N 5/24

(54) **Valve system for fluid fuel**

(30) Priority: 12.02.2010 GB 1002408
(71) Applicant: Haven Limited, Hythe Marina Village Hythe SO45 6DX (GB)
(72) Inventor: Henderson, Philip Rex, Hythe, SO45 6DX (GB)
(74) Representative: Targett, Kenneth Stanley

(57) **Abstract**

A fluid fuel consuming apparatus (such as a gas fire) is disposed in a room of a building and a supply of fluid fuel is connected to the apparatus via a valve unit (10) disposed in the same room. The valve unit comprises a valve member (18) movable between a closed position blocking a fuel pathway between its inlet and outlet ports (48I,48O) and an open position opening the fuel pathway A gas detector (42C,42H) is mounted in the valve unit for detecting the presence of a particular gas (such as carbon monoxide) and/or group of gases (such as hydrocarbons) in the atmosphere around the valve unit. The valve member, if in the open position, is automatically moved from its open to its closed position in response to the detection of the presence of such gas.

## Description

This invention relates to a valve system for a fluid fuel.

The invention was originally conceived as a gas valve system for a gas fire supplied from the gas main. However, it is also applicable for use with other apparatuses, such as boilers and stoves, which may be supplied with gas from other sources such a bottled gas, and to apparatuses employing other fuels, such as boilers using heating oil.

Gas fires can be dangerous. The gas supply pipe may leak or the gas fire may be without a functioning device for cutting off the gas supply if the fire is not alight. As a result, the room containing the gas fire may fill with hydrocarbon gas (e.g. methane, butane or propane) with the consequent risk of explosion and possibly of suffocation if the gas replaces too much of the oxygen in the room. Also, if the fire is not burning efficiently and is producing excessive toxic carbon monoxide, particularly if the outlet flue from the fire is not working properly, occupants of the room may be poisoned.

It is an aim of the present invention, or at least of specific embodiments of it, to provide a small self-contained device which can reduce the risk of explosion, suffocation or poisoning caused by gas fires and other fluid fuelled apparatuses.

In accordance with a first aspect of the present invention, there is provided a valve system, for a fluid fuel, comprising a valve and a gas detecting means. The valve has: a valve body with inlet and outlet ports for connection to a supply of fluid fuel and to a fuel consuming apparatus, respectively, and a fuel pathway extending between the inlet and outlet ports; a valve member movable between a closed position blocking the fuel pathway and an open position opening the fuel pathway; and moving means operable for moving the valve member, if in the open position, from the open position to the closed position. The gas detecting means is arranged for detecting the presence of a particular gas (such as carbon monoxide) and/or group of gases (such as hydrocarbons) in the atmosphere around the gas detecting means. ; in response to the detection of the presence of such gas. The gas detecting means is provided as a single unit with the valve and is mounted on the valve body. The moving means is arranged to operate in response to the gas detecting means so that the valve member, if in the open position, automatically moves from the open position to the closed position in response to detection of the presence of the gas or group of gases around the valve.

In accordance with a second aspect of the present invention, there is provided an installation, comprising: a fluid fuel consuming apparatus (such as a gas fire) disposed in a room of a building; and a supply of fluid fuel connected to the apparatus via a valve system according to the first aspect of the invention; wherein the valve unit is disposed in the same room as the apparatus.

Preferably, the valve unit cuts off the fuel supply before the concentration of gas becomes so great as to be dangerous and therefore prevents the situation getting worse. Of course, if there is a fuel leak upstream of the valve unit, closing the valve will not stop the leak. However, the fact that the fuel supply has been turned off and/or the provision of an audible and/or visual alarm may serve to alert the occupant to the hazard and cause them to investigate the source of the problem.

The gas detecting means is preferably operable to measure the concentration of the particular gas or group of gases in the atmosphere around the valve system and to detect the presence of such gas by comparing the measured concentration with a threshold valve.

In addition to having a gas detection facility, the valve system may further include means for detecting whether the ambient temperature exceeds a threshold, with the moving means being arranged to operate in response to the temperature detecting means so that the valve member, if in the open position, automatically moves from the open position to the closed position in response to the ambient temperature exceeding the temperature threshold. The system can therefore also cut of the fuel supply in the event of fire.

The valve system is preferably arranged to be powered by a battery, so that it does not need a connection to an external electricity supply. In this case, the valve system preferably has a space for housing the battery. Also, the valve system preferably further includes means for detecting whether the battery voltage or charge is below a threshold, with the moving means being arranged to operate in response to the battery detecting means so that the valve member, if in the open position, automatically moves from the open position to the closed position in response to the battery voltage or charge detection being below the battery threshold. Therefore, when the battery is near exhaustion, it cuts off the fuel supply until the battery is replaced.

In a preferred embodiment of the invention, said moving means comprises: a spring for urging the valve member from the open position to the closed position; a latch for holding the valve member in the open position; and means for releasing the latch. In this case, the means for releasing the latch may comprise a solenoid, and the solenoid may also be operable to engage the latch.

In a preferred embodiment of the invention, the valve system further includes: a manually operable element for moving the valve member from its closed position to its open position. A position detecting means may also be provided for detecting the position of the valve member.

In a preferred embodiment of the invention, the valve system includes a microcontroller responsive to said gas detecting means and operable to control said moving means.

The microcontroller may be operable to perform an initialisation routine, comprising the steps of: (i) causing the solenoid to release the latch at least if the valve member is in the open position; (ii) employing the position detecting means to detect movement of the valve member from its closed position to its open position caused by operation of the manually operable element; (iii) employing the gas detecting means to detect the presence of the particular gas or group of gases; and (iv) causing the solenoid to engage the latch only in the absence of the particular gas or group of gases. The valve system will therefore not latch open in dangerous circumstances.

In the case where the gas detecting means consumes power during operation, the microcontroller is preferably operable to perform a looping routine comprising the repeating steps of: (i) causing power to be supplied to the gas detecting means; (ii) employing the gas detecting means to detect the presence of the particular gas or group of gases; (iii) ceasing the supply of power to the gas detecting means; and (iv) waiting for a time interval. The system therefore monitors the gas intermittently, rather than continuously, so reducing the power consumption of the unit and increasing battery life.

A specific embodiment of the present invention will now be described, purely by way of example, with reference to the accompanying drawings, in which:
- Figure 1: is a schematic front view of a gas valve unit;
- Figure 2: is a schematic front view of the gas valve unit with its cover removed;
- Figure 3: is a schematic cross-sectioned rear view of the gas valve unit in its "off" state;
- Figure 4: is a schematic cross-sectioned rear view of the gas valve unit in its "on" state;
- Figure 5: is a circuit block diagram of the gas valve unit; and
- Figure 6: is a flow diagram illustrating the operation of the gas valve unit.

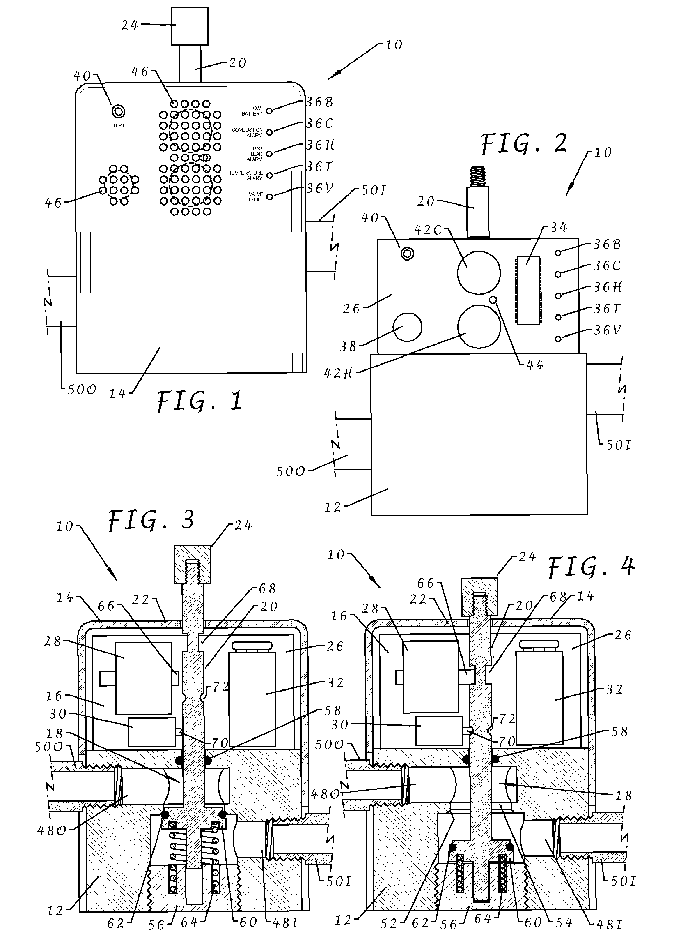

Referring to Figures 1 to 4, a gas valve unit 10 comprises a valve block 12 and a cover 14 which can be fitted over the valve block 12 to form a cavity 16 above the valve block 12. A valve member 18 is mounted in the valve block 12 and has a stem 20 which projects upwardly from the valve block 12, through the cavity 16 and through a hole in the upper wall 22 of the cover 14 to a control button 24 outside the cover 14. Inside the cavity 16, there are mounted: a printed circuit board (PCB) 26; and a solenoid 28, a microswitch 30, and a battery 32 connected to the PCB 26. On the PCB 26, there are mounted a PIC microcontroller 34, five indicator light-emitting diodes (LEDs) 36B, 36C, 36H, 36T, 36V, a beeper or buzzer 38, a "test" pushbutton switch 40, a carbon dioxide (CO) gas sensor 42C, a hydrocarbon (HC) gas sensor 42H and a temperature sensor 44. The front wall of the cover 14 is perforated by holes 46 so that the ambient air can readily reach the gas sensors 42 and temperature sensor 44, so that sound produced by the beeper 38 can escape from the cavity 16, and so that the test switch 40 can be manually operated. The front wall of the cover 14 is also perforated by holes or is transparent in the region of the LEDs 36 so that they can be seen from the outside. The cover 14 is labelled to indicate the functions of the LEDs 36 and test switch 40.

Referring in particular to Figures 3 and 4, the valve block 12 has an inlet port 481 leading into the valve block 12 from the right and for connection to a gas pipe 501 leading from the gas main. The valve block 12 also has an outlet port 480 leading out from the valve block 12 to the left above the inlet port 48I and for connection to a gas pipe 500 leading to a gas appliance such a gas fire. A valve seat 52 is formed around a passageway 54 leading from the inlet port 48I to the outlet port 480. The valve member 18 is slidable vertically in the valve block 12, guided at the lower end of the stem 20 by a plug 56 screwed into the valve block 12, and guided by a hole with a seal 58 leading from the valve block 12 to the cavity 16. The valve member 18 has a head 60 provided with a seal 62 which can engage with the valve seat 52 when the valve member 18 is in its uppermost "closed" position to block the passageway 54 and thus close the valve unit 10, as shown in Figure 3. When the valve member 18 is in its lowermost "open" position, the passageway 54 is open so that gas can flow from the inlet port 501 to the outlet port 500, as shown in Figure 4. The valve member 18 is urged towards the closed position by a compression spring 64 acting between the plug 56 and the underside of the valve head 60.

The solenoid 28 has an armature 66 and is of the double-acting type, so that when a voltage of one polarity is applied to the coil of the solenoid 28, the armature is urged to the right, and when a voltage of the opposite polarity is applied to the coil of the solenoid 28, the armature is urged to the left. The armature 66 is damped so that it tends to stay in the position to which it has been moved by the solenoid coil. The valve stem 20 has a square-sided annular groove 68 which becomes aligned with the armature 66 when the valve unit 10 is in its open position. Therefore, if, from the closed position of Figure 3, the valve member 18 is pressed downwardly by finger pressure on the control button 24, and if the solenoid 28 is then pulsed to move its armature 66 to the right into the groove 68, and if the finger pressure is then removed from the control button 24, the armature 66 will remain in the groove 68 and lock the valve unit 10 in its open position, as shown in Figure 4. From that position, if the solenoid 28 is then pulsed to move its armature 66 to the left out of the groove 68, the action of the spring 64 will lift the valve member 18 to change the valve unit 10 back to its closed position, as shown in Figure 3.

The microswitch 30 has a spring-loaded operating element 70 which is urged against the valve stem 20. The valve stem has a further annular groove 72 which becomes aligned with the operating element 70 when the valve unit 10 is open (Figure 4), in which case, the microswitch 30 is in its "off" state. When the valve unit 10 changes to its closed position (Figure 3), the operating element 70 of the microswitch 30 rides out of the groove 72 and becomes depressed, so that the microswitch 30 changes to its "on" state.

The gas sensors 42 are electrically powered. The CO gas sensor 42C produces an analogue electrical signal which is approximately linearly related to the concentration of CO in the ambient air, and which is substantially independent of other gases. The HC gas sensor 42H produces an analogue electrical signal which is approximately linearly related to the concentration of combustible gases in the ambient air, namely hydrogen, methane, ethane, propane, butane, pentane, hexane, heptane, octane, nonane, ethane, acetylene and isobutylene, but which is substantially independent of non-combustible gases. Such sensors are available off the shelf, examples being the "CO-D4" carbon monoxide sensor and the "CH-D3" combustible gas pellistor produced by Alphasense Limited, CM77 7AA, United Kingdom. The temperature sensor 44 may be provided by a passive thermistor or by an active temperature sensing semiconductor device requiring a power supply. In either case, the temperature sensor 44 produces an analogue electrical signal dependent on its temperature.

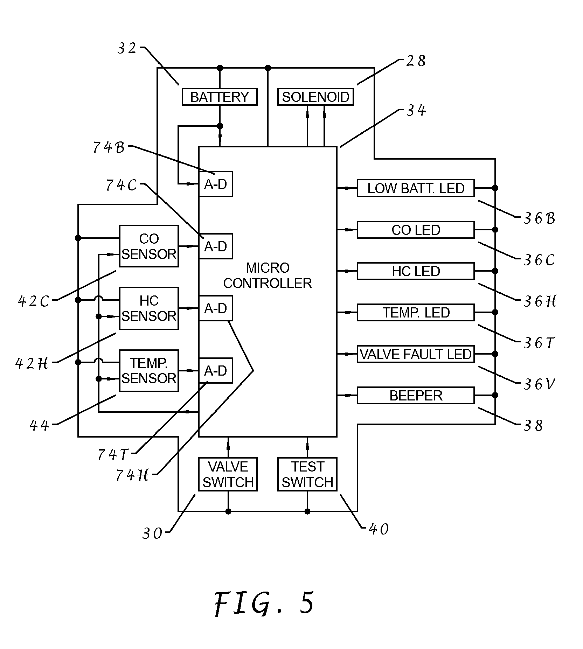

Referring now to Figure 5, the microcontroller 34 receives electrical power from the battery 32 and can selectively supply power to the gas sensors 42 (and if need be to the temperature sensor 44) when readings are to be taken from the sensors 42,44. The microcontroller 34 has analogue-to-digital converters 74B,74C,74H,74T which receive the battery voltage and the output signals from the sensors 42C,42H,44 and produce digital signals related to the battery voltage, the CO concentration, the HC concentration and the temperature. The microcontroller 34 can sense the states of the valve-operated microswitch 30 and the manually-operable test switch 40. The microcontroller 34 can supply a driving voltage of either polarity to the coil of the solenoid 28. The microcontroller 34 can also send output signals to the LEDs 36 and to the beeper 38.

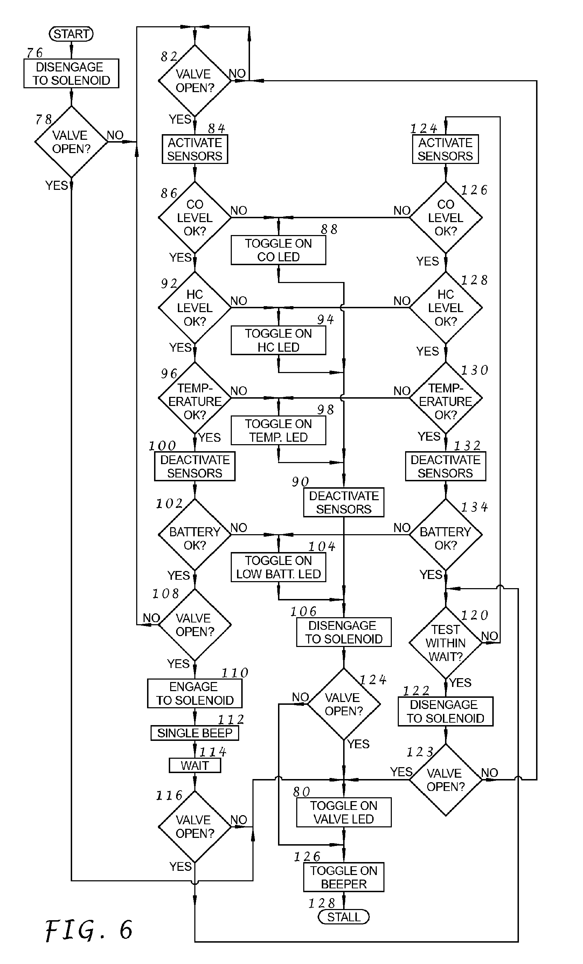

The microcontroller 34 is programmed to operate in the manner that will now be described with reference to Figure 6.

Initialisation routine.

When power is initially supplied to the microcontroller 34 upon connection of the battery 32, the microcontroller 34 performs an initialisation routine. In step 76 the microcontroller 34 sends a pulse to the solenoid 28 so that if its armature 66 is engaged with the groove 68 in the valve member 18, it becomes disengaged. After step 76, the valve unit 10 should therefore be in its closed position. In step 78, the state of the valve switch 30 is checked. If it indicates that the valve is open (indicating for example that the valve member 18 is stuck or there is a fault with the circuitry), the flow proceeds to step 80 which will be described later. However, if in step 78 the valve switch 30 indicates that the valve is not open, the flow proceeds to step 82 and loops there, checking the valve switch 30 and waiting for it to indicate that the valve has been opened as a result of the control button 24 being depressed.

Once the valve switch 30 indicates that the valve is open, in step 84 the microcontroller 34 activates the sensors 42,44 by supplying power to them. Then in step 86 the microcontroller 34 compares the value of the signal from the A-to-D converter 74C for the CO sensor 42C with a programmed threshold. The programmed threshold is chosen to represent a level of CO in the air indicative of the gas not combusting properly in the gas appliance. If the CO value is higher than the threshold, in step 88 the microcontroller 34 toggles on the CO warning LED 36C and then proceeds to step 90 to be described later. If in step 86 the CO value is not higher than the threshold, then in step 92 the microcontroller 34 compares the value of the signal from the A-toD converter 74H for the HC sensor 42H with a programmed threshold. The programmed threshold is chosen to represent a level of HC in the air indicative of a gas leak. If the HC signal is higher than the threshold, in step 94 the microcontroller 34 toggles on the HC warning LED 36H and then proceeds to step 90. If in step 92 the HC value is not higher than the threshold, then in step 96 the microcontroller 34 compares the value of the signal from the A-toD converter 74T for the temperature sensor 44C with a programmed threshold. The programmed threshold is chosen to represent a temperature indicative of there being a fire nearby. If the temperature value is higher than the threshold, in step 98 the microcontroller 34 toggles on the temperature warning LED 36T and then proceeds to step 90. If in step 96 the temperature value is not higher than the threshold, then in step 100 the microcontroller 34 deactivates the sensors 42,44 by cutting the power to them. Then, in step 102 the microcontroller 34 compares the value of the signal from the A-to-D converter 74B for the battery voltage with a programmed threshold. The programmed threshold is chosen to be indicative that the battery 32 is nearing the end of its life but still has sufficient charge to enable operation for a short time thereafter. If the battery voltage value is less than the threshold, in step 104 the microcontroller 34 toggles on the low battery warning LED 36B and then proceeds to step 106 which will be described later. If in step 102 the battery voltage value is higher than the threshold, then in step 108 the microcontroller 34 checks the state of the valve switch 30. If the valve is not still open, indicating that the user has not kept the control button 24 depressed, the flow loops back to step 82. However, if the valve is still open, in step 110 the microcontroller 34 sends a pulse to the solenoid 28 to engage its armature 66 in the groove 68 in the valve member 18, and in step 112 the microcontroller 34 causes the beeper 38 to generate a single beep, indicating to the user that they may now release the control button 24. Upon release of the control button 24, the solenoid armature 66 should maintain the valve in its open position. In step 114, the microcontroller wait for a short period of time such as 5 seconds, and then in step 116, the microcontroller 34 checks the state of the valve switch 30. If the valve is not still open, indicating that there is a fault, the flow proceeds to step 80 which will be described later. However, if the valve is still open, the initialisation routine is complete, and the flow proceeds to step 120.

Regular looping routine.

After the initialisation routine described above, the microcontroller 34 performs a looping routine. In step 120 the microcontroller 34 waits for a programmed time interval such as 5 minutes while monitoring the state of the test switch 40. If the test switch 40 is operated during that time interval, the flow proceeds to step 122 which will be described later. However, if the end of the programmed time interval is reached without the test switch 40 being operated, the flow proceeds to step 124. Step 124 and its subsequent steps 126, 128, 130, 132, 134 are identical to steps 84, 86, 92, 96, 100 and 102, respectively, described above in connection with the initialisation routine. If problems are detected, the flow branches to step 88, 94, 98 or 104 as appropriate. However, if there are no problems, after the battery voltage check in step 134, the flow loops back to step 120.

Test routine.

If, in step 120, the test switch 40 is operated during the programmed wait period, then in step 122 the microcontroller 34 sends a pulse to the solenoid 28 so that its armature 66 should disengage from the groove 68 in the valve member 18, as a result of which the valve unit 10 should change to its closed position. Then, in step 123, the microcontroller 34 checks the state of the valve switch 30. If the valve is open, indicating that there is a fault, the flow proceeds to step 80, otherwise the flow jumps to step 82 waiting for the user to depress the control button 24.

Warning routines.

In the event that the flow reaches step 90 from step 88, 94 or 98 while the sensors 42C,42H,44 are activated, then in step 90 the microcontroller deactivates the sensors 42C,42H,44 and then proceeds to step 106.

In the event that the flow reaches step 106, either from step 90 or 104, then in step 106 the microcontroller 34 sends a pulse to the solenoid 28 so that its armature 66 should disengage from the groove 68 in the valve member 18, as a result of which the valve unit 10 should change to its closed position. Then in step 124, the microcontroller 34 checks the state of the valve switch 30. If the valve is open, indicating that there is a fault, the flow proceeds to step 80, otherwise the flow jumps to step 126.

In the event that the flow reaches step 80, from step 78, 116, 123 or 124 as a result of the valve state not being as expected, then in step 80 the microcontroller 34 toggles on the valve fault warning LED 36V. The flow then proceeds to step 126.

In the event that the flow reaches step 126, from step 80 or 124, in step 126 the microcontroller 34 toggles on the beeper 38, and the routine then stalls at step 128, with the beeper 126 sounding and those of the LEDs 36 that have been toggled on remaining on until the battery 32 either goes flat or is disconnected.

It will therefore be appreciated that the microcontroller 34 regularly powers up the sensors 42C,42H,44, checks their outputs and also the battery voltage, and if necessary closes the valve, raises an alarm with the beeper 38 and indicates with the LEDs 36 the cause of the alarm. During the normal looping operation after initialisation, the solenoid does not consume any battery power, all of the LEDs are off, and the sensors 42C,42H and 44 are powered up only intermittently in order to conserve battery life.

It will be appreciated that many modifications and developments may be made to the embodiment of the invention described above. For example, the valve unit 10 may be employed in a supply pipe to other gas appliances such as boilers and cooking stoves. The valve unit 10 may also be used in a supply pipe for heating oil to an oil-fired boiler. In this case in particular, the hydrocarbon gas sensor 42H may be omitted. Although it is preferred that the valve unit 10 is battery operated, it may be powered by mains electricity, in which case the gas sensors 42C,42H may be powered continuously. Although the solenoid armature 66 has been shown in the drawings as acting directly on the valve member 18, it may instead operate through a lever.

It should be noted that the embodiment of the invention has been described above purely by way of example and that many other modifications and developments may be made thereto within the scope of the present invention.

## Claims

1. A valve system (10) for a fluid fuel comprising:
a valve having:
a valve body (12) having inlet and outlet ports (48I,480) for connection to a supply of fluid fuel and to a fuel consuming apparatus, respectively, and a fuel pathway (54) extending between the inlet and outlet ports;
a valve member (18) movable between a closed position (Fig. 3) blocking the fuel pathway (54) and an open position (Fig. 4) opening the fuel pathway; and
moving means (28,34,64,66,68) operable for moving the valve member, if in the open position, from the open position to the closed position; and
gas detecting means (34,42C,42H) for detecting the presence of a particular gas and/or group of gases in the atmosphere around the gas detecting means;
wherein:
the gas detecting means is provided as a single unit with the valve and is mounted on the valve body; and
the moving means is arranged to operate in response to the gas detecting means so that the valve member, if in the open position, automatically moves from the open position to the closed position in response to detection of the presence of the gas or the group of gases around the valve.

2. A valve system as claimed in claim 1, wherein:
the gas detecting means is operable to measure the concentration of the particular gas and/or group of gases in the atmosphere around the valve system and to detect the presence of such gas by comparing the measured concentration with a threshold valve.

3. A valve system as claimed in claim 1 or 2, wherein:
the gas detecting means (42C,42H) is operable to detect the presence of at least one of
carbon monoxide and
hydrocarbons
in the atmosphere around the valve.

4. A valve system as claimed in any preceding claim, wherein:
the valve system further includes means (34,44) for detecting whether the ambient temperature exceeds a threshold; and
the moving means is arranged to operate in response to the temperature detecting means so that the valve member, if in the open position, automatically moves from the open position to the closed position in response to the ambient temperature exceeding the temperature threshold.

5. A valve system as claimed in any preceding claim, wherein:
the valve system is arranged to be powered by a battery (32).

6. A valve system as claimed in claim 5, wherein:
the valve system has a space (16) for housing the battery.

7. A valve system as claimed in claim 5 or 6, wherein:
the valve system further includes means (34,74B) for detecting whether the battery voltage or charge is below a threshold; and
the moving means is arranged to operate in response to the battery detecting means so that the valve member, if in the open position, automatically moves from the open position to the closed position in response to the battery voltage or charge detection being below the battery threshold.

8. A valve system as claimed in any preceding claim, wherein:
said moving means comprises:
a spring (64) for urging the valve member from the open position to the closed position;
a latch (66,68) for holding the valve member in the open position; and
means (28,34) for releasing the latch.

9. A valve system as claimed in claim 8, wherein:
the means for releasing the latch includes a solenoid (28).

10. A valve system as claimed in any preceding claim, wherein:
the valve system includes a microcontroller (34) responsive to said gas detecting means and operable to control said moving means.

11. A valve system as claimed in claim 10 when dependent on claim 9, wherein:
the solenoid is also operable to engage the latch;
a manually operable element (24) is provided for moving the valve member from its closed position to its open position;
position detecting means (30,72) is provided for detecting the position of the valve member; and
the microcontroller is operable to perform an initialisation routine, comprising the steps of:
causing (76) the solenoid to release the latch at least if the valve member is in the open position;
employing (82) the position detecting means to detect movement of the valve member from its closed position to its open position caused by operation of the manually operable element;
employing (86,92) the gas detecting means to detect the presence of the particular gas or group of gases; and
causing (110) the solenoid to engage the latch only in the absence of the particular gas or group of gases.

12. A valve system as claimed in claim 10 or 11, wherein:
the gas detecting means consumes power during operation; and
the microcontroller is operable to perform a looping routine comprising the repeating steps of:
causing (124) power to be supplied to the gas detecting means;
employing (126,128) the gas detecting means to detect the presence of the particular gas or group of gases;
ceasing (132) the supply of power to the gas detecting means; and
waiting (120) for a time interval.

13. A valve system as claimed in any preceding claim, further including:
means mounted on the valve body for providing an audible and/or visual alarm in response to the detection of the presence of such gas.

14. An installation, comprising:
a fluid fuel consuming apparatus disposed in a room of a building; and
a supply of fluid fuel connected to the apparatus via a valve system as claimed in any preceding claim;
wherein the valve system is disposed in the same room as the apparatus.

15. An installation as claimed in claim 14, wherein:
the apparatus is a gas fire.
